# EUROPEAN PATENT APPLICATION

(11) **EP 4 491 770 A1**
(43) Date of publication of application: **15.01.2025**
(21) Application number: 23184423.4
(22) Date of filing: 10.07.2023
(51) Int. Cl.: C25B 15/08, C25B 15/00

(54) **CLOSED-LOOP CARBON CYCLE**

(71) Applicant: Tree Energy Solutions Belgium BV, 1930 Zaventem (BE)
(72) Inventor: Van Poecke, Paul, 1930 Zaventem (BE)
(74) Representative: IP HILLS NV

(57) **Abstract**

Method for operating a closed-loop carbon cycle (100), comprising:
- creating synthetic methane (106) from renewable energy (114) in a first geographical area (101), comprising:
∘ producing hydrogen (123) via electrolysis (113),
∘ feeding CO2 (109) and produced hydrogen (123) into Sabatier reactors (300) of an eNG production plant (110),

- transporting said synthetic methane (106) to a second geographical area (102);
- converting synthetic methane into usable energy (112) in said second geographical area (102), comprising:
∘ distributing synthetic methane (107) to one or more eNG conversion facilities (111);
∘ using said synthetic methane in said eNG conversion facilities (111), producing an output comprising CO2;
∘ capturing CO2 from said output;

- transporting said captured CO2 (108) to said first geographical area (101);
- establishing said closed-loop carbon cycle (100) by feeding said captured CO2 (109) received from said second geographical area (102) to said eNG production plant (110).

## Description

### Field of the Invention

The present invention generally relates to the field of cleantech. In particular, the invention relates to a closed-loop carbon cycle, contributing to a global energy system with sustainable use of natural resources while reducing negative environmental impacts.

### Background of the Invention

Fossil fuels have, and continue to, play a dominant role in global energy systems. However, they come with several negative impacts. Firstly, when burned they produce carbon dioxide, being the largest driver of global warming. Secondly, fossil fuel reserves are limited, thus being a depleting source. Over the past decade, renewable power generation technologies such as solar and wind have been proved to provide a durable low-carbon alternative to traditional fossil-fuel based technologies. However, achieving a widespread use of renewables is not straightforward, due to actual challenges. Firstly, renewable energy production requires sufficient availability of natural energy sources like solar or wind, while particularly in industrialized regions such availability may be limited relative to the energy demand. Moreover, required space to install large wind parks or solar power plants may be an issue in such regions. Finally, renewable technologies are dependent upon uncontrollable weather conditions and can only generate power intermittently when conditions are favourable. Without a form of energy storage, solar and wind generation are dependent upon legacy fossil fuel systems to provide backup power.

The prior art discloses various solutions, each focussing on particular aspects in the transformation towards a clean and durable energy system.

In a first group of prior-art solutions, known as power-to-gas solutions, a fuel is produced from renewable energy sources, the fuel thereby acting as an energy carrier. Most power-to-gas solutions use electrolysis to produce hydrogen, wherein electricity from a renewable energy source is used in the electrolysis process. In a power-to-hydrogen system, the produced hydrogen is used directly in industry or transport, thereby contributing to decarbonisation. Transport and storage of hydrogen, however, brings additional challenges, due to its low energy density and high diffusivity.

In other power-to-gas solutions, the produced hydrogen is not used directly, but is first converted into a synthetic fuel, such as methane, ammonia or methanol. In a power-to-methane system, hydrogen obtained from electrolysis is combined with carbon dioxide to produce synthetic methane, using a methanation reaction such as the Sabatier reaction or biological methanation. Carbon dioxide required for the methanation process is for example supplied from a waste-biogas plant or is extracted from the air, thereby requiring additional technology. Synthetic methane offers a higher energy density than hydrogen, but does not offer a decarbonised solution as is the case for hydrogen. In general, power-to-gas solutions allow to utilize excess energy from renewable electricity generation to make a fuel, for use at a later time, thus focussing on the challenge concerning the intermittent character of renewable energy.

A second group of prior art solutions focusses on mitigation of carbon dioxide emissions. In JP2020200812A a zero-emission power plant is presented. A CO2 turbine plant is used to produce electric power based on a supply of a carbonaceous fuel. Carbon dioxide leaving the CO2 turbine, is supplied to an organic compound synthesis plant being adjacent to the power plant. The organic compound synthesis plant produces dimethyl ether and methanol from the exhaust CO2, thereby avoiding CO2 to be released into the atmosphere. Hydrogen needed by the organic compound synthesis plant is produced with an electrolyser, the latter receiving electric power from the generator of the power plant. In other examples of zero-emission power plants using a CO2 turbine, CO2 from the turbine exhaust is evacuated for its storage and subsequently used for permanent sequestration. In general, this type of power plants contribute to mitigation of CO2 emissions, but they still rely on carbonaceous fuels and have the additional complexity and cost of sequestering or processing the exhaust CO2. WO2022/198273A1 discloses an alternative zero-emission power plant, wherein hydrogen is combusted instead of a carbonaceous fuel. A decarbonized electricity production is thus obtained, but other issues may arise due to the low energy-density of hydrogen, and its tendency to diffuse through materials.

Also with respect to zero-emission powering of vehicles, solutions have been disclosed in the prior art, either relying on hydrogen or relying on on-board storage of produced exhaust gases. In US2022/298952A1 exhaust gases from combusting gasoline, diesel, ethanol or natural gas in a combustion engine, are stored on-board the vehicle until they are off-loaded at dedicated locations. In US2020/048086A1, methanol is used in a Solid Oxide Fuel Cell for powering a vehicle, the methanol being transported by truck to a refuelling station after being produced from hydrocarbons at another location. The produced CO2 is stored onboard the vehicle, recollected by the gas station and returned to a CO2 sequestration network through piping or via truck transport. Similar to the zero-emission power plants, this type of zero-emission engines contribute to mitigation of CO2 emissions, but the cost of CO2 sequestration impedes a widespread dissemination.

It is an objective of the present invention to disclose a solution that resolves one or more of the above-described shortcomings of the prior art solutions. More particularly, it is an objective to present a closed-loop carbon cycle, contributing to a global energy system with sustainable use of natural resources while reducing negative environmental impacts.

### Summary of the Invention

According to a first aspect of the present invention, the above identified objectives are realized by a method for operating a closed-loop carbon cycle defined by claim 1, the method comprising:
- creating synthetic methane from renewable energy in a first geographical area, comprising:
   ∘ producing hydrogen via electrolysis of water, wherein electric power for said electrolysis is mainly based on renewable energy from natural resources;
   ∘ feeding CO2 and said produced hydrogen into one or more Sabatier reactors of an eNG production plant located in said first geographical area, thereby producing synthetic methane according to the Sabatier process,
- transporting said synthetic methane created in said first geographical area to a second geographical area, via shipping by vessel and/or via transmission pipeline and/or via train transport;
- generating and capturing CO2 while converting synthetic methane into usable energy in said second geographical area, comprising:
   ∘ distributing synthetic methane received from said first geographical area to one or more eNG conversion facilities located in said second geographical area;
   ∘ using said synthetic methane in said eNG conversion facilities, thereby producing an output comprising CO2 at the respective eNG conversion facilities;
   ∘ separating and capturing CO2 from said output at any of said eNG conversion facilities, resulting in captured CO2;
   wherein said one or more eNG conversion facilities comprise:
   ∘ one or more power plants or industrial plants or vehicle propulsion systems consuming oxygen and synthetic methane in an oxy-combustion, wherein CO2 is separated and captured from an output comprising CO2 and water; and/or
   ∘ one or more hydrogen production facilities consuming synthetic methane in a methane conversion process producing hydrogen, wherein CO2 is separated and captured from an output comprising CO2 and hydrogen; and/or
   ∘ one or more industrial production plants consuming synthetic methane in an industrial process, wherein CO2 is separated and captured from an output generated by said industrial process;
- transporting said captured CO2 generated in said second geographical area to said first geographical area, via shipping by vessel and/or via transmission pipeline and/or via train transport;
- establishing said closed-loop carbon cycle by feeding said captured CO2 received from said second geographical area to said eNG production plant, and successively repeating said steps of
   ∘ creating synthetic methane from renewable energy in said first geographical area,
   ∘ transporting said synthetic methane created in said first geographical area to said second geographical area,
   ∘ generating and capturing CO2 while converting synthetic methane into usable energy in said second geographical area, and
   ∘ transporting captured CO2 generated in said second geographical area to said first geographical area.

Thus, the invention concerns a method for operating a closed-loop carbon cycle. A closed-loop carbon cycle refers to a cyclical process, wherein a sequence of process steps is continuously repeated, and carbon is continuously circulated throughout execution of the closed cycle. In this, the steps involved in the cyclical process are not accomplished at a single location or at an individual plant; conversely, the closed-loop carbon cycle involves process steps at two different geographical locations, and transport steps therebetween.

The first geographical area is an area with an abundance of renewable energy. The abundance of renewable energy may result from an excess availability of renewable energy sources, e.g. solar energy in solar belt countries or hydropower in Canada, or may result from a decreased demand, or both may apply. The first geographical area may also be referred to as the upstream location or the energy harvesting location. The second geographical area is an area where the energy demand is high, relatively to the availability of renewable energy in that area. Typically it is an industrialised region, e.g. located in Western Europe. The second geographical area may also be referred to as the downstream location or the energy demanding location.

The first and second geographical area are different geographical areas, in the sense that they are typically separated by a relatively long distance. In particular, the first and second geographical area are characterized by the fact that a long-distance transport connection exists therebetween, allowing for a common transport of substantial quantities between both areas. For example, the long-distance transport connection is provided as a transmission pipeline, a shipping route or a railway line. In this, a transmission pipeline refers to the principle pipeline having the widest diameter in a pipeline system, for long-distance transport of a gas or liquid. Typically, at the locations where the fluid will be used, smaller diameter pipes like mains or service lines branch off from the principal transmission pipeline, for distribution to individual users. The transport connection between the first and second geographical area may be intercontinental, e.g. a Middle East to Western Europe, or international, e.g. Spain to German, or interregional, e.g. one US state to another US state.

In a first step of the closed-loop cycle, synthetic methane is created from renewable energy in the first geographical area. This first step in the cycle comprises multiple substeps.

One substep involves the production of hydrogen. Hydrogen is produced in an electrolyser, via electrolysis of water. The electric power needed for the electrolysis process is mainly based on renewable energy from natural resources. Renewable energy refers to electricity generated from renewable energy sources. Renewable energy may for example comprise solar power and/or hydropower and/or wind power and/or geothermal power. The electric power needed for the electrolysis process is mainly based on renewable energy, meaning that on average, the largest portion of electric energy supplied to the electrolyser originates from renewable energy sources. In a preferred embodiment, all of the electric power needed for the electrolysis process is based on renewable energy.

In a next substep of the first step, the produced hydrogen is fed into one or more Sabatier reactors. Apart from hydrogen, also an input of carbon dioxide is supplied to the one or more Sabatier reactors. The Sabatier reactors make part of an eNG production plant located in the first geographical area, for producing synthetic methane according to the Sabatier process. The Sabatier process is a type of methanation process wherein carbon dioxide is reacted with hydrogen in the presence of a catalyst, at an elevated temperature. Suitable catalysts are for example Nickel, Ruthenium or Alumina. The elevated temperature is typically between 300°C and 400°C. The hydrogenation of carbon dioxide according to the Sabatier reaction results in methane and water. The produced methane (CH4) is referred to as synthetic methane or electric natural gas (eNG), to differentiate from naturally available methane. A gas separation unit at the eNG production plant may be used to separate water from the output of the Sabatier process, thereby obtaining synthetic methane. In this way, renewable energy available in the first geographical area is transformed into a transportable form of energy, wherein synthetic methane acts as an energy-dense carrier.

In a second step of the closed-loop cycle, the synthetic methane created in the first geographical area is transported to the second geographical area. This means that an amount of synthetic methane produced at the eNG production plant in the energy harvesting location, is transported, over a relatively long distance, towards the energy demanding location. This long-distance transport, being in common for all downstream users, may be done via shipping by vessel and/or via transmission pipeline and/or via train transport. After the common transport towards the second geographical area, the synthetic methane is further distributed to specific locations in the second area, where specific downstream processes will each be using portions of the transported synthetic methane.

Typically, synthetic methane obtained from the Sabatier reactor(s) is in gaseous condition. Optionally, the first step of the closed-loop cycle comprises an additional substep, wherein - in the first geographical area - produced gaseous synthetic methane is prepared for transport, by liquification or pressurization, before being transported to the second geographical area. For example, transport of synthetic methane via a transmission pipeline may happen in gaseous state, after pressurization, or in liquid state, after liquefaction. In another example, liquified methane is transported by vessel or train, thereby being stored in liquid state in one or more storage tanks. Preparation for transport may happen at the eNG production plant, or at another location in the first geographical area, e.g. a port terminal.

In a third step of the closed-loop cycle, executed in the second geographical area, synthetic methane is converted into a usable form of energy, while generating and capturing carbon dioxide (CO2). The third step comprises multiple substeps.

Within the third step, synthetic methane received from the first geographical area is first distributed to one or more eNG conversion facilities located in the second geographical area. The one or more eNG conversion facilities taking part in the closed-loop cycle are also referred to as the group of eNG conversion facilities. An eNG conversion facility is e.g. a plant, vehicle, installation, or other, wherein synthetic methane is consumed, while producing a usable form of energy, e.g. producing electric power or drive power, producing hydrogen for use by another application, producing an industrial product like steel or cement, etc. Typically, multiple eNG conversion facilities are comprised in the group, wherein each of them is supplied with a portion of the synthetic methane received from the first geographical area. For example, some or all of the eNG conversion facilities may be assembled in a hub, e.g. close to a port. Typically, the amount of synthetic methane received from the first geographical area is mainly or completely distributed to the group of eNG conversion facilities; it is also possible, however, that a portion of the synthetic methane received from the first geographical area is temporarily stored in the second geographical area, e.g. for strategic storage. Distribution of synthetic methane to an eNG conversion unit, after being transported from the first to the second geographical area, may e.g. happen via truck transport, vessel transport, train transport, pipeline transport, or a combination thereof.

Next, the synthetic methane, that was distributed to the eNG conversion facilities, is used in said individual eNG conversion facilities. Thus, every eNG conversion facility receives a portion of the synthetic methane that was transported to the second geographical area, for use in a particular process. Each of the downstream processes, executed at an eNG conversion facility, results in an output, wherein this output comprises carbon dioxide (CO2). For example, the downstream process may be a combustion, a methane reforming process, an industrial process using methane, etc. At any of the eNG conversion facilities, CO2 is separated from the produced output, and captured. Capturing refers to the fact that CO2 is evacuated without being released into the atmosphere. Captured CO2 refers to the portion of output CO2 that was separated and captured at the eNG conversion facilities. Captured CO2, at a particular eNG conversion facility, may be in gaseous or liquid state. In particular downstream processes, a part of the CO2 in the produced output may be recirculated into the process. In such a case, the produced output consists of recirculated CO2, net produced CO2, and other components. In this, captured CO2 refers to the portion of net produced CO2, that was separated and captured at the eNG conversion facility.

Different types of eNG conversion facilities are possible, wherein each type applies a particular process for converting methane into a usable form of energy.

In a first possible type of an eNG conversion facility, methane is consumed in an oxy-combustion process. An oxy-combustion or oxy-fuel combustion is the process of burning a fuel using pure oxygen instead of air. Since the nitrogen component of air is not heated, a highly efficient combustion is obtained and higher flame temperatures are possible. As firing with pure oxygen would result in too high flame temperatures, typically the feed is diluted with recycled flue gas. At an eNG conversion facility applying an oxy-combustion, synthetic methane is burned in the presence of pure oxygen. Oxygen supplied to the eNG conversion facility may e.g. be produced by means of an Air Separation Unit or via an electrolysis process. Oxygen may be produced locally, or may be transported to the eNG conversion facility after being produced at another location. The eNG conversion facility is e.g. an oxy-combustion power plant, wherein the produced heat is used to generate steam for use in a steam turbine, thereby producing electrical power. In another example, the eNG conversion facility is an Allam-Fetvedt power plant, wherein the CO2 resulting from the oxy-fuel combustion is used as a working fluid in a gas turbine. In yet another example, the eNG conversion facility is an industrial power plant using an oxy-combustion to create heat for a heating process in a kiln or furnace, e.g. as a step in the production of steel, cement or chemicals. In yet another example, the eNG conversion facility is a vehicle propulsion system applying an oxy-combustion process for powering a vehicle, e.g. in an oxy-combustion engine. Oxy-combustion of synthetic methane results in an output comprising carbon dioxide and water, from which water can be easily be removed using a water separator. An eNG conversion facility of this type is advantageous, as the oxy-combustion allows for a high percentage of the produced carbon dioxide to be separated and captured, thereby obtaining a high CO2 capture rate, up to 98%.

A second possible type of an eNG conversion facility is a hydrogen production facility, wherein synthetic methane is consumed in a methane conversion process, for production of hydrogen. A methane conversion process is for example a catalytic methane reforming process based on Autothermal Reforming or Steam Reforming. In another example, the methane conversion process makes use of Partial Oxidation. Typically, the reforming reaction or partial oxidation reaction results in a mixture of CO and hydrogen, after which a water-gas shift reaction may be applied to produce a mixture of CO2 and hydrogen. This type of eNG conversion facility thus produces an output comprising CO2 and hydrogen, from which CO2 is separated and captured. CO2 may e.g. be separated from other gas components in the output by means of a cryogenic process. Also this second type of eNG conversion facility allows to separate and capture CO2 at a high CO2 capture rate, wherein capture rates up to 98% may be reached.

A third possible type of an eNG conversion facility is an industrial production plant consuming synthetic methane in an industrial process, wherein CO2 is separated and captured from an output generated by said industrial process. An industrial production plant is e.g. a plant producing a product like steel, cement, chemicals, lime, paper, ... or a plant producing electric power. The industrial process consuming synthetic methane is such that it allows for an efficient CO2 capturing. For example, it may be a combustion process, or a direct-reduction process applied in steel production.

In the closed-loop cycle according to the invention, the group of one or more eNG conversion facilities comprises one or more oxy-combustion facilities, and/or one or more hydrogen production facilities, and/or one or more industrial production plants. Thus, among the one or more eNG conversion facilities in the group there is at least one of the first type, or at least one of the second type, or at least one of the third type. Also a combination of the aforementioned three types may occur amongst the eNG conversion facilities taking part in the loop cycle, or multiple eNG conversion facilities of a specific type may be present. Apart from eNG conversion facilities according to the three aforementioned types, other types may be present in the group, as long as the facility consumes synthetic methane and produces carbon dioxide, and carbon dioxide can be efficiently separated and captured from the produced output.

In a fourth step of the closed-loop cycle, the carbon dioxide generated and captured at the eNG conversion facilities, is transported from the second geographical area to the first geographical area. Thus, captured CO2 is collected from any of the eNG conversion facilities comprised in the group, and transported back to the energy harvesting location, where it will be reused for producing synthetic methane. This transport, over a relatively long distance and being in common for all downstream users, may be done via shipping by vessel and/or via transmission pipeline and/or via train transport. Remark that, physical properties of carbon dioxide are similar to propane, such that similar known transport means and conditions may be applied. For transporting the CO2 back to the first geographical area, the same transporting means may be used as was the case for transporting synthetic methane to the second geographical area, or different means may be used.

Captured CO2 may be in gaseous or liquid state. Before transport to the second geographical area, CO2 captured at the various eNG conversion facilities may be prepared for transport, e.g. by liquifying gaseous captured CO2 before it is transported. Preparation for transport may happen at the eNG production plant, or at another location in the second geographical area, e.g. a port terminal. In this, a specific preparation may be applied for captured CO2 at individual eNG conversion units, or captured CO2 may first by collected from various eNG conversion facilities, after which the preparation step takes place.

The fifth step in the carbon cycle concerns feeding the captured CO2, received from the second geographical area, to the eNG production plant in the first geographical area, for producing synthetic methane via the Sabatier process. Thus, CO2 generated and captured in the energy demanding location, is reused for synthetic methane production in the energy harvesting location, thus allowing that renewable energy - being widely available in the energy harvesting location - is again converted into a transportable fuel. Typically, CO2 is supplied in gaseous condition to the one or more Sabatier reactors. A regasification of liquified CO2 may therefore take place after transport to the second geographical location and before feeding in the one or more Sabatier reactors of the eNG production plant.

Reuse of the captured CO2 in the eNG production plant thus allows to close the cycle. In particular, the closed-loop carbon cycle is established by successively repeating the aforementioned steps, i.e.:
- creating synthetic methane from renewable energy in the first geographical area,
- transporting the synthetic methane created in said first geographical area to the second geographical area,
- generating and capturing CO2 while converting synthetic methane into usable energy in the second geographical area,
- transporting captured CO2 generated in said second geographical area to said first geographical area, and
- feeding said captured CO2 received from said second geographical area to said eNG production plant.

The invention goes along with multiple advantages. Firstly, the closed-loop carbon cycle allows to solve the global geographical mismatch between renewable energy supply and demand. Indeed, facilities in the energy demanding location get access to an abundant source of renewable energy, while the lalter is insufficiently available in their own region. In this, renewable energy is converted into a transportable synthetic fuel, wherein synthetic methane acts as a energy-dense carrier allowing for a compact transport without diffusion issues. Moreover, due to its conversion into a synthetic fuel, renewable energy becomes available in the energy demanding location without being hindered by intermittent availability.

Secondly, CO2 produced in the energy demanding location, is not just recycled in the same area, but is reused in the energy harvesting location, where an abundance of renewable energy is available for establishing its reuse. Indeed, the invention avoids that CO2 would need to be sequestered without further utilization, but it also avoids that captured CO2 would further be utilized in the energy demanding location itself, where typically non-renewable electric energy would be needed for e.g. producing a synthetic fuel from the captured CO2. Thus, the invention not only allows for a carbon-neutral cycle, mitigating CO2 emissions in the energy demanding location, but also allows for a particularly advantageous reuse of the captured CO2, wherein the latter is used to convert renewable energy into a transportable energy carrier in an area with plenty of renewable energy available.

Thirdly, a closed loop is created, wherein carbon can continuously be circulated. In this, downstream users in the energy demanding location can fully rely on the synthetic methane received from the energy harvesting location, without requiring any other carbonaceous fuel supply. In other words, the loop can be operated endlessly without an additional input of other carbonaceous fuels towards the loop, thereby being independent from exhaustible fuel sources. Moreover, as downstream processes are used allowing for a high CO2 capture rate, only a limited supply of additional CO2 towards the loop will be needed, thus allowing for a (quasi) infinite repetition of the loop cycle.

Finally, as various upstream and downstream processes are integrated in a closed loop operated across the first and second geographical area, an energy integrated global process becomes possible. Indeed, cold or hot streams produced in one process may efficiently be recuperated in another process of the loop, such that a unique energy integration of different upstream and downstream processes is obtained.

In summary, the invented closed-loop carbon cycle enables a global energy system, that (1) is carbon-neutral, mitigating carbon dioxide emissions, (2) is increasingly based on renewables, not relying on exhaustible fossil fuels, and (3) still allows to meet extensive energy needs in a continuous way. A global solution is thus provided, wherein a unique integration of individual components in a holistic cycle, results in simultaneously solving various environmental and energy-related issues.

Optionally, in an embodiment, all of the synthetic methane transported to the second geographical location is distributed to the one or more eNG conversion facilities. This implies that all of the synthetic methane that was transported from the first to the second geographical area, is distributed to the group of eNG conversion facilities, wherein CO2 will be generated and captured. Thus, none of the synthetic methane that was transported from the first to the second geographical area, is used for storage in the second geographical area, or is used for any other use in the second geographical area without capturing CO2.

Optionally, the one or more eNG conversion facilities comprise one or more industrial production plants consuming synthetic methane in an industrial process, wherein CO2 is separated and captured from an output generated by the industrial process, and wherein at least 80% of the net produced CO2 in the output is separated and captured, preferably at least 85%, more preferably at least 90%, more preferably at least 95%, more preferably at least 97%. This implies that for industrial production plants taking part in the loop, industrial processes are preferred that allow for a high CO2 capture rate. Such high individual capture rates at the industrial production plants are beneficial, as it results in a high global capture rate, thereby enabling a quasi-endless repetition of the loop, with a minimal supply of additional CO2 being required.

Optionally, for any of the eNG conversion facilities, at least 80% of the net produced CO2 in the output is separated and captured, preferably at least 85%, more preferably at least 90%, more preferably at least 95%, more preferably at least 97%. This implies that for any of the individual eNG conversion facilities taking part in the loop, downstream processes are preferred that allow for a high CO2 capture rate. Such high individual capture rates are beneficial, as it results in a high global capture rate, thereby enabling a quasi-endless repetition of the loop, with a minimal supply of additional CO2 being required.

Optionally, any of the eNG conversion facilities is
- a power plant or industrial plant or vehicle propulsion system consuming oxygen and synthetic methane in an oxy-combustion, or
- a hydrogen production facility consuming synthetic methane in a methane conversion process producing hydrogen.
This implies that within the group of eNG conversion facilities taking part in the loop, only eNG conversion facilities of the above-mentioned first type are present, or only eNG conversion facilities of the above-mentioned second type are present, or a combination of eNG conversion facilities of the first and second type is present without any other types being present. As typically the first and second type of eNG conversion facilities allow for a high CO2 capture rate, up to 98%, having these types of eNG conversion facilities in the loop is beneficial for realizing a high global CO2 capture rate, and thus obtaining a quasi-endless repetition of the loop, with a minimal supply of additional CO2 being required.

Optionally, for an eNG conversion facility executing a process wherein synthetic methane is consumed together with oxygen, gaseous oxygen is supplied to the respective eNG conversion facility for use in said process, said gaseous oxygen being separated from ambient air by means of an Air Separation Unit or being obtained from a water electrolysis process. Downstream processes consuming oxygen together with synthetic methane are for example an oxy-combustion process or a methane conversion process for production of hydrogen based on Autothermal Reforming or Partial Oxidation. In an Air Separation Unit (ASU), atmospheric air is separated into oxygen and nitrogen based on a cryogenic distillation process. In particular, atmospheric air is first compressed and cooled until it liquifies, after which a cryogenic distillation process is applied to separate cold liquid oxygen. Heat exchangers may be used for supplying heat to the liquid oxygen produced from the distillation process, thereby obtaining gaseous oxygen for feeding the eNG conversion facility. Oxygen may be produced locally, by means of an ASU close to the eNG conversion facility, or may be produced at a remote location, and transported to the eNG conversion facility, where it is temporarily stored. In another embodiment, oxygen is produced by means of an electrolyser, wherein the electrolysis of water results in hydrogen and oxygen. Also in this embodiment, oxygen may be produced locally, by means of an electrolyser close to the eNG conversion facility, or it may be produced at a remote location, and transported to the eNG conversion facility, where it is temporarily stored. For example, the required oxygen could be obtained as an output from the upstream electrolyser: besides hydrogen needed for the Sabatier process, the upstream electrolyser produces gaseous oxygen, which could be liquified and transported to the downstream location.

Optionally, the one or more eNG conversion facilities comprise one or more Allam-Fetvedt power plants, wherein CO2 resulting from an oxy-combustion of synthetic methane is used as a working fluid in a gas turbine for producing electric power, according to the Allam-Fetvedt cycle or Allam cycle. An Allam-Fetvedt cycle or Allam cycle is a supercritical carbon dioxide (sCO2) power cycle that is operated in a manner similar to other turbine cycles, but wherein CO2 is used as the working fluid in the turbomachinery. The cycle begins by burning a gaseous fuel, in this case gaseous synthetic methane, with oxygen in a combustor, thus applying an oxy-combustion process. The Allam-Fetvedt power plant may therefore be considered as an example of an oxy-combustion power plant. The combustor provides an exhaust comprising CO2 and water, which is supplied to a turbine expander, coupled to an electric power generator. The turbine exhaust comprises steam and CO2, wherein, after separation of water, a portion of the CO2 exhaust is typically recirculated to the oxy-combustion, for lowering the combustion flame temperature and for diluting combustion products such that the cycle working fluid is predominantly CO2. The CO2 exhaust, after deduction of the recycled CO2, is the net produced CO2. The net produced CO2 may be separated and captured from the exhaust to a high extent, thereby resulting in captured CO2 from the eNG conversion facility being an Allam-Fetvedt power plant. An important advantage of the Allam-Fetvedt power cycle is that, since the CO2 is already in the cycle, the CO2 can easily be separated and captured, at a very high capture rate, up to 98%, without requiring additional installations or a substantial amount of parasitic power for separating and capturing the CO2. Furthermore, the Allam-Fetvedt power plant allows for zero-emission electricity production, as well as for an efficient combustion process.

Optionally, the one or more eNG conversion facilities comprise a vehicle propulsion system, the vehicle propulsion system comprising an oxy-combustion engine installed on a vehicle, and wherein:
- synthetic methane received from the first geographical location is supplied to a storage tank onboard of the vehicle, and
- at the vehicle:
   ∘ oxygen is produced by means of an Air Separation Unit onboard of the vehicle, or is stored in a tank onboard of the vehicle;
   ∘ the oxygen is used, together with synthetic methane from the storage tank, in the oxy-combustion engine, the oxy-combustion engine used for propelling the vehicle;
   ∘ CO2 produced by the engine is captured, and the captured CO2 is stored in a second storage tank onboard of the vehicle.

The vehicle may be any type of vehicle, for example a ship, train, truck or car. An oxy-combustion engine is an internal combustion engine burning a fuel, in this case synthetic methane, in an oxy-combustion process. For this purpose, synthetic methane is store in a storage tank onboard of the vehicle. The onboard stored synthetic methane corresponds to a portion of the synthetic methane transported to the second geographical area, wherein, in the second geographical area, this portion was transferred to the onboard storage tank. The exhaust from the oxy-combustion engine comprises CO2 and water, from which, after separation of water, a portion of CO2 may be recirculated to the combustor. The CO2 exhaust, after deduction of the recycled CO2, is the net produced CO2. The net produced CO2 may be separated and captured from the exhaust to a high extent, thereby resulting in captured CO2 from the eNG conversion facility being a vehicle propulsion system with oxy-combustion engine. An advantage of an oxy-combustion engine is that it allows for zero-emission propulsion of a vehicle, while still using a traditional type of internal combustion engine. Moreover, an oxy-combustion engine allows for a compact installation, such that an acceptable amount of space is taken by the engine when e.g. being installed on a vessel. Furthermore, it allows for a very high CO2 capture rate, up to 98%, and an efficient combustion process.

Optionally, the one or more eNG conversion facilities comprise one or more hydrogen production facilities for converting synthetic methane into hydrogen, the conversion comprising:
- feeding gaseous synthetic methane to a methane converter;
- in the methane converter, applying a conversion process producing syngas comprising hydrogen and CO, the conversion process being based on Autothermal Reforming or Steam Methane Reforming or Partial Oxidation;
- applying a water-CO shift reaction to convert CO and steam into hydrogen and CO2, resulting in an output comprising CO2 and hydrogen;
- separating CO2 from other gas components in the output, resulting in gaseous or liquid captured CO2.

In an embodiment, the methane conversion process is a methane reforming process, wherein hydrogen is produced from methane using a catalyst. For example, an Autothermal Reforming (ATR) may be applied, wherein synthetic methane is reacted with oxygen and steam to produce syngas. In another example, a Steam Methane Reforming (SMR) is applied, wherein synthetic methane is reacted with steam to produce syngas. In another embodiment, the methane conversion process is bases on a Partial Oxidation, consuming synthetic methane and oxygen to produce syngas. In any of these embodiments syngas is produced, being a mixture of hydrogen and oxygen. Applying a water-CO shift reaction, wherein CO reacts with water, further results in CO2 and hydrogen, from which CO2 can be separated and captured. Optionally, CO2 is separated from other gas components in the output by means of a cryogenic process. A hydrogen production facility is an advantageous type of eNG conversion facility, as it allows to separate and capture CO2 at a high capture rate, up to 98%.

Optionally, the one or more eNG conversion facilities comprise a hydrogen production facility connected to a hydrogen grid, wherein hydrogen produced at the hydrogen production facility is further distributed to one or more industrial plants via the hydrogen grid, for further industrial use of the hydrogen. For example, the hydrogen production facility is located in a hub, close to a port terminal where the transported synthetic methane arrives. A central production of hydrogen thus takes place, wherein hydrogen is produced in the hub, and afterwards distributed to industrial users via a hydrogen grid.

Optionally, the one or more eNG conversion facilities comprise a hydrogen production facility at a decentralised location, and:
- the transport of synthetic methane via shipping or transmission pipeline or train transport is followed by a further distribution transport to the decentralised location;
- the synthetic methane received at the decentralised location after the distribution transport is supplied to the decentralised hydrogen production facility, thereby producing hydrogen for on-location use.
Contrary to a central production of hydrogen, this embodiment concerns a decentralized or on-location production of hydrogen. Therefore, after having arrived in the second geographical area, a further distribution transport of the synthetic methane, or a portion thereof, takes place in the second geographical area. Optionally, the distribution transport to the decentralised location is at least partly done via truck transport of liquified synthetic methane, or via pipeline transport. After the distribution transport, the received synthetic methane is used for an on-site production of hydrogen at the hydrogen production facility. In an embodiment, the hydrogen production facility is a hydrogen refuelling station. In this case, hydrogen is produced locally at the refuelling station, and hydrogen powered vehicles using may refuel at the refuelling station. The process applied at the decentralised hydrogen production facility may e.g. be based on Autothermal Reforming, Steam Reforming or Partial Oxidation. In case of Autothermal Reforming or Partial Oxidation, oxygen required for the conversion process may be produced by means of an Air Separation Unit at the decentralised location, after which the locally produced oxygen and the locally received synthetic methane are supplied to the decentralised hydrogen production facility.

Optionally, the one or more eNG conversion facilities comprise a hydrogen production facility installed on a vehicle, for example a vessel, and:
- synthetic methane received from the first geographical location is supplied to a storage tank on board of the vehicle, and
- at the vehicle:
   ∘ oxygen is produced by means of an Air Separation Unit onboard of the vehicle, or is stored in a tank onboard of the vehicle;
   ∘ the oxygen is used, together with synthetic methane from the storage tank, in the hydrogen production facility, thereby on-board producing hydrogen for use in a fuel cell, the fuel cell used for propelling the vehicle;
   ∘ CO2 produced during on-board production of hydrogen is captured, and the captured CO2 is stored in a second storage tank onboard of the vehicle.

The vehicle may be any type of vehicle, for example a ship, train, truck or car. A small hydrogen production facility and ASU, together with two storage tanks, may be installed on the vehicle. Alternatively, the ASU is replaced with a storage tank filled with oxygen. The onboard stored synthetic methane corresponds to a portion of the synthetic methane transported to the second geographical area, wherein, in the second geographical area, this portion was transferred to the onboard storage tank. The onboard produced hydrogen is used in a fuel cell for powering an electrical motor that drives the ship. The produced CO2 may be separated and captured from the output of the hydrogen production process to a high extent, thereby resulting in captured CO2. Typically, CO2 is liquified for storage on the vehicle. It may be unloaded form the vehicle when reaching a dedicated location, e.g. a port. This type of eNG conversion facility thus allows for the zero-emission propulsion of a vehicle, and a high CO2 capture rate.

Optionally, the one or more eNG conversion facilities comprise one or more industrial production plants, for production of steel or cement or chemicals or petrochemical products or lime or paper or electric power.

Optionally, the synthetic methane created in the first geographical area is transported via shipping by vessel or transmission pipeline from a first terminal facility in the first geographical area to a second terminal facility in the second geographical area; and the CO2 generated in the second geographical area is transported via shipping by vessel or transmission pipeline from the second terminal facility to the first terminal facility; synthetic methane received at the second terminal facility is distributed to multiple of said eNG conversion facilities via truck transport and/or train transport and/or ship transport and/or pipeline. A terminal facility refers to a terminal located in a port, where facilities are available for e.g. loading and unloading, handling and processing of products. Transport between the two geographical areas happens by transport between the two port terminals. From the second terminal, synthetic methane is further distributed to the eNG conversion facilities via another transporting means, adapted for local transport.

Optionally, the synthetic methane created in said first geographical area is transported to the second geographical area via shipping by vessel, wherein the vessel for synthetic methane transport is driven by an engine, and CO2 produced by this engine during the transport is captured and stored onboard of the vessel. This results in a zero-emission transport when transporting synthetic methane from the first to the second geographical area. Further optionally, the CO2 generated and captured in the second geographical area is transported to the first geographical area via shipping by vessel, wherein the vessel for CO2 transport is driven by an engine, and CO2 produced by this engine during the transport is captured and stored onboard of the vessel. This results in a zero-emission transport when transporting captured CO2 from the second to the first geographical area.

Having such a zero-emission transport between both geographical areas is advantageous, as it further contributes to making the closed loop fully carbon-neutral. Indeed, even though a long-distance transport between the two geographical areas is required to solve the geographical mismatch between renewable energy supply and demand, no additional emissions are released during transport, due to also executing the long-distance transport steps in a carbon-neutral way.

Optionally, the engine of the vessel for synthetic methane transport and/or of the vessel for CO2 transport, consumes synthetic methane stored onboard of the vessel, the synthetic methane being created from renewable energy in the first geographical area. Thus, the fuel consumed by the engine for propelling the vessel is synthetic methane, namely synthetic methane that has been created in the eNG production facility making part of the loop. This means that a portion of the synthetic methane that was created by the eNG production facility is loaded to the vessel, where it is stored in a storage tank. During the transport by vessel, the onboard stored synthetic methane is consumed by the engine for propelling the vessel. This may happen when transporting synthetic methane from the first to the second area, or when transporting CO2 from the second to the first area, or in both transport steps. Loading of synthetic methane to a vessel may happen either in the first or in the second geographical area. The advantage of using synthetic methane for propelling the vessel is that no other types of carbonaceous fuels need to be supplied to the loop cycle, not even for the long-distance transport steps. In this way, the closed loop cycle fully relies on synthetic methane created from renewable energy.

Optionally, CO2 captured and stored onboard of the vessel for synthetic methane transport and/or of the vessel for CO2 transport, is used in the first geographical area for producing synthetic methane in the eNG production plant. This means that CO2 captured when propelling the vessel for transport between the two areas, is reused in the eNG production facility making part of the loop. Thus, a portion of the captured CO2 that is fed to the eNG production facility originates from CO2 captured on board of the vessel. Unloading of CO2 captured onboard of the vessel may either happen in the second geographical area, where it may be added to captured CO2 from the eNG conversion facilities, or may happen in the first geographical area. The advantage of using CO2 captured on board of the vessel in the eNG production facility, is that even CO2 produced during the long-distance transport steps is reused in an advantageous way, namely for synthetic methane production in a region with an abundance of renewable energy.

Optionally, the engine of the vessel for synthetic methane transport and/or of the vessel for CO2 transport, is an internal combustion engine using oxy-combustion. An oxy-combustion engine is an internal combustion engine burning a fuel in an oxy-combustion process. The oxy-combustion engine of the vessel for synthetic methane transport, or for CO2 transport, may consume synthetic methane produced at the eNG production facility or another type of fuel. The exhaust from the oxy-combustion engine comprises CO2 and water, from which, after separation of water, a portion of CO2 may be recirculated to the combustor. The CO2 exhaust, after deduction of the recycled CO2, is the net produced CO2, which may be captured to a high extent and subsequently stored in an onboard storage tank. An advantage of using an oxy-combustion engine for the vessel transport between the two geographical areas, is that it allows for zero-emission propulsion, while still using a traditional type of internal combustion engine. Moreover, an oxy-combustion engine allows for a compact installation, such that an acceptable amount of space is taken by the engine on the vessel. Furthermore, treating exhaust gas or flue gas is straightforward, as the engine exhaust gas mainly consists of CO2 and H2O. This has the further advantage that less space on the ship is taken up by equipment for cleaning, purifying, separating, or stripping of exhaust gas. Finally, the oxy-combustion engine allows for an efficient combustion process and a high CO2 capture rate.

It is to be noted that the aforementioned advantages related to an oxy-combustion engine for propelling a vessel, are obtained independently from the specific transport executed by the vessel. Also, the aforementioned advantages are obtained for any type of vehicle, e.g. a vessel, train, truck or car. The above described vehicle with internal combustion engine using oxy-combustion is thus not linked to the specific transport it is used for. In other words, the features of the above described vehicle with oxy-combustion engine are not structurally or functionally related to the other features of the closed-loop carbon cycle. The vehicle with oxy-combustion engine herein disclosed, is therefore a further independent aspect of the invention, the vehicle with oxy-combustion engine not being only disclosed in combination with the other features of claim 1, and the vehicle not being limited to a vessel.

Optionally, the engine of the vessel for synthetic methane transport and/or of the vessel for CO2 transport, is an electric motor powered by a fuel cell, wherein the fuel cell is fed with onboard produced hydrogen. Hydrogen is produced by means of a small hydrogen production facility installed on the vessel. Hydrogen production may be based on Autothermal Reforming or Steam Reforming or Partial Oxidation. The hydrogen production facility consumes methane stored onboard in a storage tank; this fuel may be synthetic methane produced in the eNG production plant making part of the loop. For a hydrogen production process consuming oxygen, oxygen may be produced onboard, by means of an ASU installed on the vessel. Alternatively, oxygen may be stored onboard in a storage tank. The onboard produced hydrogen is used in a fuel cell for powering an electrical motor that drives the vessel. The produced CO2 may be separated and captured from the output of the hydrogen production process to a high extent, and subsequently be stored in an onboard storage tank. An advantage of using a fuel cell for the vessel transport between the two geographical areas, is that zero-emission propulsion is obtained, while realising a high CO2 capture rate.

It is to be noted that the aforementioned advantages related to a fuel cell with onboard hydrogen production for propelling a vessel, are obtained independently from the specific transport executed by the vessel. Also, the aforementioned advantages are obtained for any type of vehicle, e.g. a vessel, train, truck or car. The above described vehicle with fuel cell and onboard hydrogen production is thus not linked to the specific transport it is used for. In other words, the features of the above described vehicle with fuel cell and onboard hydrogen production are not structurally or functionally related to the other features of the closed-loop carbon cycle. The vehicle with fuel cell and onboard hydrogen production herein disclosed, is therefore a further independent aspect of the invention, the vehicle not being only disclosed in combination with the other features of claim 1, and the vehicle not being limited to a vessel.

Optionally, at least during selected time periods of operating the closed-loop cycle, additional CO2 is fed to the eNG production plant, in addition to the CO2 received from the second geographical area, for producing synthetic methane, the additional CO2 being produced via a Direct Air Capturing process or being biogenic CO2 produced from organic material. In practice, the carbon amount arriving back at the start of the loop under the form of CO2 will be reduced somewhat, due to losses in conversion and capture rate. Therefore, the loop needs to be supplemented with additionally generated CO2. The additional CO2 is supplied to the eNG production plant, after having been produced via an additional process, other than the downstream processes applied at the eNG conversion facilities. The process for producing additional CO2 is typically applied in the first geographical area, e.g. close to or at the eNG production plant. In an embodiment, the additional CO2 is produced by means of a Direct Air Capturing process (DAC), wherein CO2 is extracted from ambient air by means of a solvent. Afterwards, CO2 may be stripped from the solvent by the application of heat. In another embodiment, the additional CO2 is biogenic CO2 resulting from an organic material.

The amount of additional CO2 that needs to be added to the loop depends on the global capture rate that is achieved over the eNG conversion facilities. For example, if only considering oxy-combustion facilities and hydrogen production facilities as eNG conversion facilities, losses are between 2% and 3% that need to be compensated. On average, the amount of additional CO2 supplied to the eNG production plant is small compared to the total amount of CO2 supplied to the eNG production plant, the total amount consisting of the additional CO2 and the captured CO2 received from the second geographical area. Preferably, the amount of additional CO2 is maximum 20% of the total amount, more preferably maximum 15%, more preferably maximum 10%, more preferably maximum 5%, more preferably maximum 3%.

Optionally, the additional CO2 is produced via a Direct Air Capturing process, abbreviated DAC, wherein at least part of the heat required in the DAC process results from waste heat available in the eNG production plant, the waste heat originating from heat released during the Sabatier process. Heat required in the DAC process is typically for stripping CO2 from the solvent. Waste heat from the exothermic Sabatier process may be used as heat source for the DAC process. Alternatively or additionally, low-temperature waste heat from the electrolysis may be used.

Optionally, at least 85% of the net quantity of produced CO2 is reused in the eNG production plant for synthetic methane production, preferably at least 90%, more preferably at least 95%, more preferably at least 97%. The net quantity of produced CO2 corresponds to the total CO2 production by all of the eNG conversion facilities deducted with the CO2 amount recirculated within specific eNG conversion facilities. A global CO2 capture rate may thus be defined as the percentage of the total net quantity of produced CO2 over all eNG conversion facilities, that is captured and transported back to the first geographical area. The global capture rate is at least 85%, preferably at least 90%, more preferably at least 95%, more preferably at least 97%. Such high global capture rate results in a quasi-endless repetition of the loop, with a minimal supply of additional CO2 being required.

Optionally, CO2 originating from a third party is transported to the first geographical area together with the CO2 captured at the eNG conversion facilities, for use in the eNG production plant. A third party may e.g. be located in the second geographical area. CO2 received from the third party is transported to the first geographical area, together with CO2 captured at the eNG conversion facilities. Such an additional source of CO2 may e.g. be useful when not all of the synthetic methane received from the first area is consumed in the group of eNG conversion facilities, but a portion is stored in the second geographical area.

Optionally, the synthetic methane produced at the eNG production plant is liquified before transport to the second geographical area. For example, the synthetic methane is transported by vessel, where it is stored in liquified condition in a storage tank. For this purpose, synthetic methane leaving the eNG production plant is cooled, such that cold liquid methane, e.g. at a temperature of -164°C is obtained. After having arrived in the second geographical area, the received liquified methane may be used as a cold source, wherein cold available from the liquified synthetic methane is used for a cooling purpose in the second geographical area. In this way, cold generated in one area is recuperated in another area, thereby contributing to an energy integrated loop and increased overall efficiency. Various embodiments are possible for using cold available from the liquified synthetic methane in the second geographical area.

In a first embodiment, the available cold is used for liquifying captured CO2 before transport to the first geographical area. CO2 may thereafter be transported in liquified condition, e.g. when being stored in a storage tank of a vessel. While liquifying the CO2, heat is supplied to the synthetic methane, thereby vaporizing the liquified synthetic methane before feeding into one of the eNG conversion facilities.

In a second embodiment, cold from the liquified synthetic methane is used for for cooling air in an Air Separation Unit. In an Air Separation Unit (ASU), atmospheric air is separated into oxygen and nitrogen based on a cryogenic distillation process. In particular, atmospheric air is first compressed and cooled until it liquifies, after which a cryogenic distillation process is applied to separate cold liquid oxygen. Typically, a portion of the cold needed in this cooling process originates from liquified methane acting as cold source. The ASU is used for producing oxygen, the latter e.g. being fed to an oxy-combustion power plant or to a hydrogen production facility. While providing cold to the ASU process, heat is supplied to the synthetic methane, thereby vaporizing the liquified synthetic methane before feeding into one of the eNG conversion facilities.

In a third embodiment, cold from the liquified synthetic methane is used in a cryogenic process for separating CO2 from other components. Such a cryogenic process may be applied in a hydrogen production facility, producing an output comprising CO2 and hydrogen, wherein a cryogenic process is applied to separate CO2 from other components in the output.

In a fourth embodiment, cold from the liquified synthetic methane as a cooling source in an Allam-Fetvedt cycle, e.g. for cooling the turbine exhaust, the cycle being applied in one of the eNG conversion facilities being an Allam-Fetvedt power plant. In another embodiment, the liquified synthetic methane serves as a cooling source in a power production via an organic rankine cycle.

Also a combination of the aforementioned embodiments is possible. Recuperation of cold from the liquified synthetic methane may happen at a common location in the second geographical area, e.g. at a terminal facility, or may happen in function of an individual downstream process, close to a particular eNG conversion facility.

Optionally, the CO2 captured from the eNG conversion facilities is liquified before transport to the first geographical area. For example, the captured CO2 is transported by vessel, where it is stored in liquified condition in a storage tank. For this purpose, CO2 captured at the eNG conversion facilities is cooled, such that cold liquid CO2, e.g. at a temperature of -50°C is obtained. After having arrived in the first geographical area, the received liquified CO2 may be used as a cold source, wherein cold available from the liquified CO2 is used for a cooling purpose in the first geographical area. In this way, cold generated in one area is recuperated in another area, thereby contributing to an energy integrated loop and increased overall efficiency. Various embodiments are possible for using cold available from the liquified CO2 in the first geographical area.

In a first embodiment, cold available from the liquified CO2 is used for liquifying synthetic methane before transport to the second geographical area. Synthetic methane may thereafter be transported in liquified condition, e.g. when being stored in a storage tank of a vessel. While liquifying the synthetic methane, heat is supplied to the liquid CO2, thereby vaporizing the CO2 before feeding into the eNG production plant.

In a second embodiment, cold available from the liquified CO2 is used as a cooling source in the electrolysis applied in the first geographical area. In a third embodiment, it is used as a cooling source in the eNG production plant, e.g. for cooling the Sabatier reactors.

Also a combination of the aforementioned embodiments is possible. Recuperation of cold from the liquified CO2 may happen at the location where the captured CO2 arrives in the first geographical area, e.g. at a terminal facility, or may happen at the eNG production plant.

Optionally, at the eNG production plant, waste heat originating from heat released during said Sabatier process, is used to produce superheated steam. The Sabatier process is an exothermic process, and waste heat resulting from this process may be recuperated, e.g. by using it to produce superheated steam. In an embodiment, the superheated steam may be used for regasification of liquified CO2 received from the second geographical area, before feeding into the eNG production plant. In another embodiment, the superheated steam may be used for electric power generation by means of a steam turbine.

Optionally, the superheated steam is used for electric power generation, and the generated electric power is used to produce hydrogen via electrolysis.

Optionally, the superheated steam is used for electric power generation, and generated electric energy is temporarily stored by means of battery technology, or the superheated steam is used for thermal power storage via molten salt battery technology. In periods of shortage in renewable energy from natural resources, the stored electric energy may be used for producing hydrogen by electrolysis, the produced hydrogen being fed to the one or more Sabatier reactors, thereby allowing to continuously operate the Sabatier reactors. Indeed, due to the intermittent character of renewable energy, periods may occur wherein insufficient renewable energy is available to produce hydrogen required for the Sabatier process. Unless relying on non-renewable energy, this would lead to temporarily stopping the Sabatier reactors, after which the process needs to be started again. In view of obtaining a high efficiency of the upstream process, however, it is beneficial to operate the Sabatier reactors on a continuous basis, such that the reactor stays hot continuously. Therefore, it is advantageous to, in periods of shortage in renewable energy, produce hydrogen based on stored electric energy. As the stored electric energy was previously produced based on waste heat, its origin is still renewable. This further contributes to obtaining a global energy system increasingly based on renewables.

Optionally, during selected periods, liquid oxygen is produced by means of one or more Air Separation Units (ASU) in the second geographical area, based on a cryogenic distillation of ambient air, the produced liquid oxygen being temporarily stored, and during other periods, the stored liquid oxygen is vaporized and supplied to one or more of the eNG conversion facilities, for conversion of synthetic methane. Oxygen is e.g. be consumed by eNG conversion facilities applying an oxy-combustion process, or applying an Autothermal Reforming or Partial Oxidation process for the production of hydrogen. Oxygen may be produced by means of an ASU. Operating the ASU requires electric power, for driving the air compressor. This electric power may be implemented as a parasitic load on the power plant serving as eNG conversion facility, or may be provided independent from the eNG conversion facility. The market of electricity produced by renewable energy sources is characterized by fluctuating prices. Therefore, in an advantageous approach, the ASU may be used for producing liquid oxygen, or producing additional liquid oxygen, in periods when renewable electricity prices are low, e.g. due to stranded wind power. The liquid oxygen may be temporarily stored, and at a later stage - in periods where prices are high - be vaporized, and used for feeding the eNG conversion facility consuming oxygen. Such an intermediate storage of oxygen thus further contributes in obtaining a global energy system increasingly based on renewables, while continuously meeting substantial energy needs.

### Brief Description of the Drawings

Fig. 1 illustrates a closed-loop carbon cycle, according to an embodiment of the invention.
Fig. 2 illustrates a possible arrangement at the downstream location, according to an embodiment of the invention.
Fig. 3 illustrates an example of an eNG conversion facility in a loop according to an embodiment of the invention, for 1 MW from the electrolyser, the eNG conversion facility being an Allam-Fetvedt power plant.
Fig. 4 illustrates an example of an eNG conversion facility in a loop according to an embodiment of the invention, for 1 MW from the electrolyser, the eNG conversion facility being a hydrogen production facility based on Autothermal Reforming.
Fig. 5 illustrates an Air Separation Unit, and the recuperation of cold available from liquified synthetic methane, according to an embodiment of the invention.
Fig. 6 illustrates an oxy-combustion engine, according to an embodiment of the invention.

### Detailed Description of Embodiment(s)

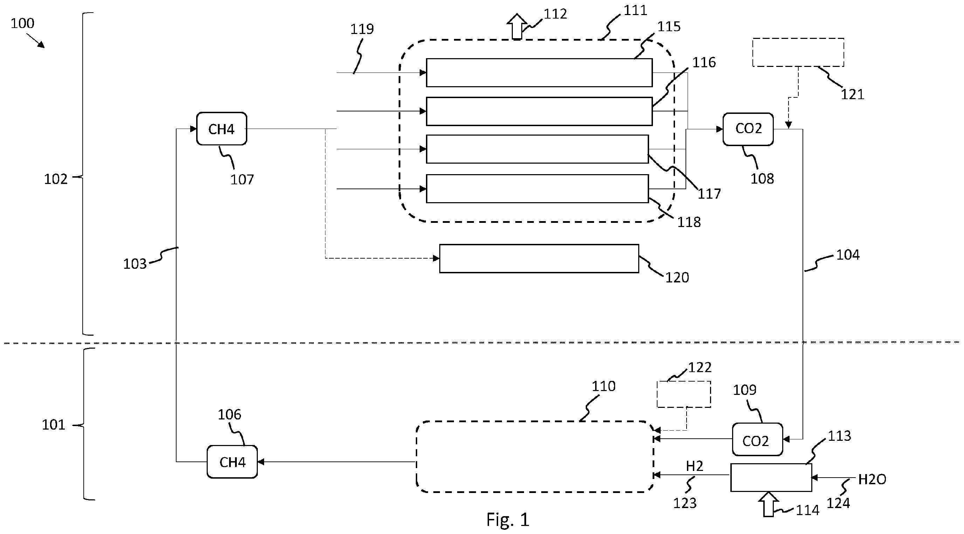

Fig. 1 illustrates a closed-loop carbon cycle 100, involving a first geographical area 101 or upstream location 101, and a second geographical area 102 or downstream location 102. The first geographical area 101 is an area where an abundance of renewable energy is available, and serves in the loop 100 as an energy harvesting location. The second geographical area 102 serves in the loop 100 as an energy demanding location. A long-distance transport connection 103 exists between the first and second area, and a long-distance transport connection 104 exists between the second and first area. In the first geographical area 101, an electrolyser 113 is present, and an eNG production plant 110, the latter comprising one or more Sabatier reactors. In the second geographical area 102, a group 111 of eNG conversion facilities is present, comprising an oxy-combustion power plant 115, another oxy-combustion facility 116, a hydrogen production facility 117, and an industrial production plant 118. The oxy-combustion power plant 115 is for example an Allam-Fetvedt power plant. The other oxy-combustion facility 116 is for example an industrial plant applying an oxy-combustion for heating purposes, or a vehicle with an oxy-combustion engine. The industrial production plant 118 is e.g. a plant for production of steel, or cement, or chemicals, etc.

When operating the closed-loop carbon cycle 100, a first step involves the creation of synthetic methane 106 in the first geographical area 101. In particular, hydrogen 123 is produced by the electrolyser 113 from water 124, based on renewable energy 114. Hydrogen 123 and carbon dioxide 109 received from the second geographical area 102 are fed into the one or more Sabatier reactors of the eNG production plant 110. In the eNG production plant 110, synthetic methane 106 is produced according to the Sabatier process. The Sabatier reaction CO2 + 4H2 → CH4 + 2 H2O, results in a mixture of methane and water, from which H2O is separated. This results in synthetic methane 106 created in the first geographical area 101, which may be prepared for transport, e.g. via liquefaction.

The synthetic methane 106 created in the first geographical area 101 is transported to the second geographical area 102, e.g. by vessel, by train or by transmission pipeline, see 103 in the Figure. In the second geographical area 102, the synthetic methane 107 received from the first area, is mainly distributed - see 119 in the Figure - to the group 111 of eNG conversion facilities, wherein synthetic methane is converted into a usable form of energy 112. Before use in the eNG conversion facilities, a preparation step may take place, e.g. for regasification of the synthetic methane. Optionally, a portion of the received synthetic methane 107 is stored in the second geographical area, see 120 in the Figure. At any of the eNG conversion facilities 111, synthetic methane is consumed, thereby producing an output comprising CO2. Moreover, at any of the eNG conversion facilities, CO2 is separated and captured from the output, resulting in captured CO2 108 collected from the group 111 of eNG conversion facilities. The captured CO2 108 is transported back to the first geographical area 101, e.g. by by vessel, by train or by transmission pipeline, see 104 in the Figure. Before transport, a preparation step may take place, e.g. for liquifying CO2. Optionally, CO2 originating from a third party 121 may also be transported to the first geographical area 101.

In the first geographical area 101, the CO2 109 received from the second geographical area is fed into the eNG production plant 110, for production of synthetic methane 106 based on renewable energy 114. Before being fed into the Sabatier reactors, a preparation step may take place, e.g. for regasification of CO2. By repeating the aforementioned steps, a closed loop 100 is established wherein carbon is continuously circulated. No additional carbonaceous fuels are supplied to the loop 100. In order to compensate for CO2 losses, a limited amount of additional CO2 122 is fed into the eNG production plant 110. The additional CO2 122 is produced in the first geographical area 101 via a Direct Air Capturing process or is provided as biogenic CO2.

A possible mass and energy balance throughout the loop 100, is for example:
- In the first geographical area 101: renewable power production: 46 TWh/year; hydrogen production: 790 kton/year; synthetic methane production: 1,6 Mton/year.
- In the second geographical area 102: synthetic methane import: 1,6 Mton/year; production in eNG conversion facilities: 512 kton H2/year + 12,5 TWh/year electric power; CO2 export: 4,3 Mton/year.

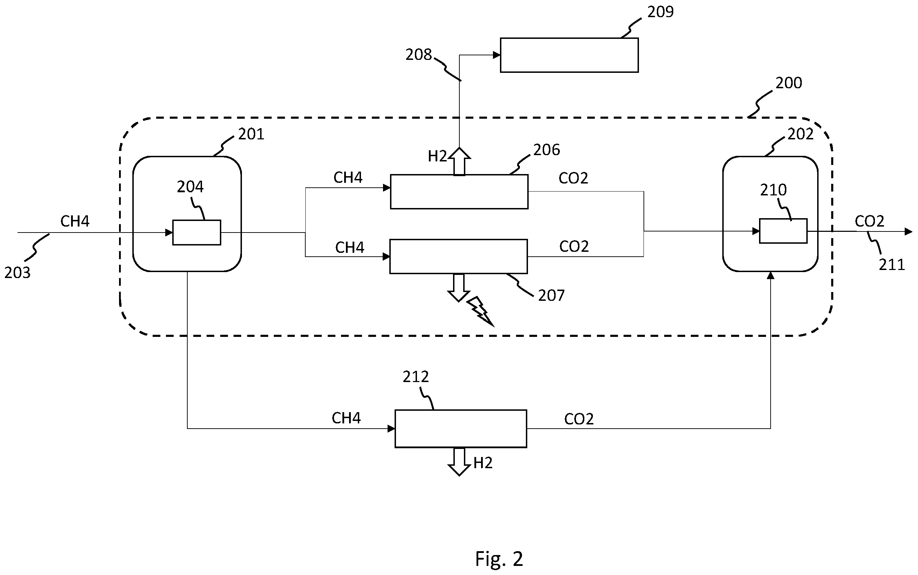

Figure 2 illustrates a possible arrangement of downstream users in the second geographical area 102. In the shown embodiment, synthetic methane 203 is shipped by vessel to the second geographical area 102, where it arrives in a port and is unloaded to a CH4 terminal 201. During transport, the shipped synthetic methane 203 is stored in liquified condition, in a storage tank onboard the vessel, at a temperature of -164 °C and a pressure of 1 bar. At the terminal 201, the unloaded liquid methane 203 is vaporized in a regasification unit 204. Gaseous synthetic methane is supplied to eNG conversion facilities, comprising an oxy-combustion power plant 207 and a hydrogen production facility 206.

The eNG conversion facilities 206 and 207 are located in a hub 200, close to the port where the synthetic methane 203 is received. For distribution of gaseous synthetic methane to the facilities 206 and 207, e.g. existing natural gas pipelines may be used, the latter already being available for other purposes at the location of the terminal 205 and hub 200. If the eNG conversion facilities 206, 207 require a supply of oxygen, the latter may produced by means of an Air Separation Unit, located at the terminal 201 or at the particular eNG conversion facility. CO2 captured at the facilities 206, 207 is collected at a CO2 terminal 202, located in the same port as CH4 terminal 201. At the terminal 202, CO2 is liquified in a liquefaction unit 210. Liquified CO2 is loaded to the storage tank of a vessel, for transport to the first geographical area 101. In the storage tank, CO2 211 is stored in liquified condition, at a temperature of -50 °C and a pressure of 7 bar.

The eNG conversion facility 206 represents a facility for centralized hydrogen production: hydrogen is produced at the hub 200, after which it is distributed to industrial or other users 209 via a hydrogen grid 208. These users 209 may be located outside the hub 200. On the other hand, a portion of the synthetic methane 203 is used for on-location production of hydrogen, at a decentralized hydrogen production facility 212, located remote from the hub 200. If the hydrogen production facility 212 requires a supply of oxygen, oxygen may be produced locally, at the decentralized location, by means of an Air Separation Unit. The decentralized hydrogen production facility 212 is for example a hydrogen refuelling station. CO2 produced by the hydrogen production facility 212 is captured and temporarily stored at the decentralized location, after which it is transported to the CO2 terminal 202. Transport of synthetic methane to the decentralised hydrogen production facility 212, and transport of CO2 from the decentralised hydrogen production facility 212, may e.g. be done by means of truck transport, wherein synthetic methane resp. CO2 are stored in liquid condition on the truck.

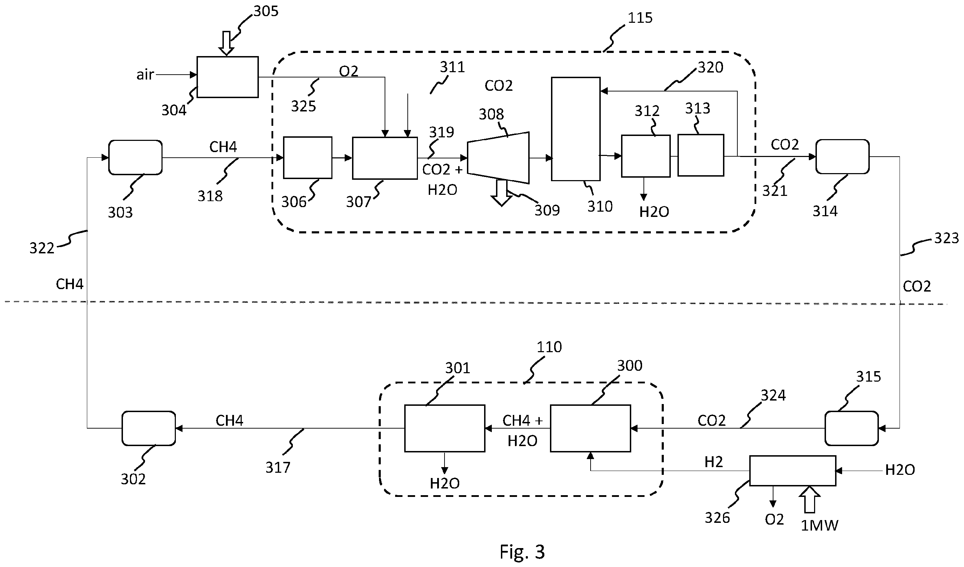

Fig. 3 shows a closed-loop carbon cycle, for an Allam-Fetvedt power plant 115 as eNG conversion facility in the energy demanding location, illustrating the balance for 1 MW power from the electrolyser 326 in the energy harvesting location.

In the upstream location 101, hydrogen 323 is produced by an electrolyser 326, based on renewable energy 327. Hydrogen 323 and carbon dioxide 322 are fed into the Sabatier reactor 300 of the eNG production plant 110. For a 1 MW input to the electrolyser 326, a mass flow rate of 180 kg/h of water, results in 20 kg/h hydrogen produced by the electrolyser 326, together with 160 kg/h oxygen. The Sabatier reactor 300 receives carbon dioxide at a mass flow rate of 110 kg/h, together with the hydrogen mass flow of 20 kg/h.

In the Sabatier reactor 300, carbon dioxide is reacted with hydrogen in the presence of a catalyst, according to the Sabatier reaction: CO2 + 4H2 → CH4 + 2 H2O. Suitable catalysts are for example Nickel, Ruthenium or Alumina. The Sabatier reaction results in a mixture comprising synthetic methane and water, at a mass flow rate of 40 kg/h CH4 and 90 kg/h H2O, and a temperature of 550 °C. A gas separation unit 301 is used to separate water from the mixture, at a flow rate of 90 kg/h. The output 317 of the eNG production plant 300 is gaseous synthetic methane at a mass flow rate of 40 kg/h and a temperature of 40°C.

A liquefaction unit 302 is used to liquify the synthetic methane, resulting in a flow 322 of liquid synthetic methane transported to the downstream location, at an average rate of 40 kg/h, a temperature of -164°C and a pressure of 1 bar. At the downstream location, an evaporation unit 303 is used for regasification, resulting in gaseous synthetic methane 318 at a mass flow rate of 40 kg/h and a temperature of 40°C.

At the downstream location, an Allam-Fetvedt power plant 115 is present, together with an Air Separation Unit (ASU) 304. The ASU consumes electric power 305 to extract oxygen from ambient air, thereby producing an oxygen flow 325 of 160 kg/h which is supplied to the power plant 115.

The Allam-Fetvedt power plant 115 comprises a fuel compression unit 306, a combustor 307, an sCO2 gas turbine 308, a regenerator 310, a separator 312, and a compression unit 313. After compression of synthetic methane 318 in the compression unit 306, it is fed into the combustor 307, together with oxygen 325 produced by the ASU 304. Also a flow of recirculated supercritical CO2 311 is supplied to the combustor 307. In the combustor 307, an oxy-combustion takes place, according to: CH4 + 202 → CO2 + 2H2O. An output mixture 319 comprising carbon dioxide and water leaves the combustor 307, at a mass flow rate of 110 kg/h CO2 and 90 kg/h H2O, together with a flow of recirculated CO2. Typical temperatures of the mixture after the combustion process are between 1100°C and 1200°C, and typical pressures between 200 and 400 bar. The exhaust 319 of the oxy-combustion process is supplied to the gas turbine 308, the latter coupled to a generator for producing electric power 309.

Downstream from the turbine 308, the working fluid, which typically comprises 90% carbon dioxide at 20 - 50 bar pressure, enters the regenerator 310 where it is cooled, and heats recirculated carbon dioxide up to about 700 °C before entering the combustor. Downstream of the regenerator 310 an additional exhaust cooler may be present for further cooling. Next, the fluid is further cooled in a cooler-separator 312, where the water vapor is condensed, resulting in separated water at a mass flow rate of 90 kg/h. After the separator 312, the fluid enters the compression unit 313, typically comprising a multistage inter-cooled compressor, wherein the pressure is boosted beyond the critical pressure of CO2. The exhaust CO2 leaving the compression unit 313, is partly recirculated to the combustor, see 320, while the remaining portion 321 leaves the power plant 115 as captured CO2 321. The recirculated flow 320 is cooled into its liquid form in an aftercooler, and increased in pressure by a recycle pump, before entering the regenerator 310. In the regenerator 310, the temperature of the recirculated CO2 is increased, returning the CO2 into a supercritical state. The resulting sCO2 311 flows to the combustor 307.

When assuming a perfect CO2 capturing, the flow of captured CO2 321 corresponds to the net produced CO2 at a rate of 110 kg/h. The gaseous captured CO2 321 leaving the Allam-Fetvedt power plant 115 is liquified before transport, in a liquefaction unit 314. Liquefied CO2 323 is transported to the upstream location, at a mass flow rate of 110 kg/h, temperature of -50°C and pressure of 7 bar. After transport to the upstream location, the liquid CO2 323 is vaporized in an evaporation unit 315, resulting in a flow 324 of gaseous CO2 towards the eNG production plant, at a rate of 110 kg/h.

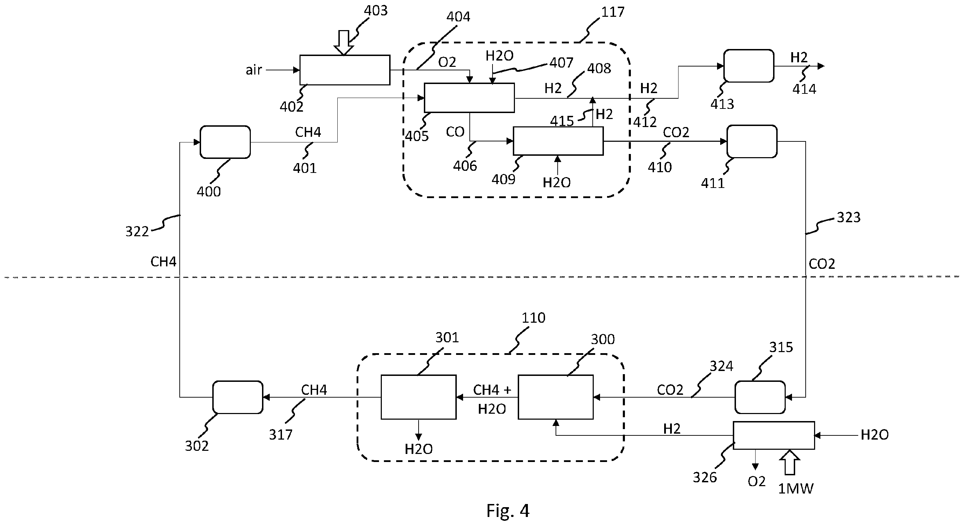

Fig. 4 shows a closed-loop carbon cycle, for a hydrogen production facility 117 as eNG conversion facility in the energy demanding location, illustrating the balance for 1 MW power from the electrolyser 326 in the energy harvesting location. The installations and processes at the upstream location, and the conditions during transport between both areas, are the same as explained in relation to Fig. 3

Liquified synthetic methane 322 is transported to the downstream location, at an average rate of 40 kg/h, a temperature of -164°C and a pressure of 1 bar. At the downstream location, an evaporation unit 400 is used for regasification, resulting in gaseous synthetic methane 401 at a mass flow rate of 40 kg/h and a temperature of 40°C.

At the downstream location, a hydrogen production facility 117 is present, together with an Air Separation Unit (ASU) 402. The ASU 402 consumes electric power 403 to extract oxygen from ambient air, thereby producing an oxygen flow 404 of 20 kg/h which is supplied to the hydrogen production facility 117. The hydrogen production facility 117 comprises a methane reformer 405, wherein a catalytic Autothermal Reforming process takes place, according to the reaction: 4CH4 + O2 + 2H2O → 10H2 + 4CO. The reformer 405 receives gaseous synthetic methane 401 at a rate of 40 kg/h, gaseous oxygen 404 at a rate of 20 kg/h, and steam 407 at a rate of 22,5 kg/h. The reformer 405 produces hydrogen 408 at a rate of 12,5 kg/h, and CO 406 at a rate of 70 kg/h. The produced CO 406 is supplied to unit 409, wherein a water-CO shift takes place according to: CO + H2O → CO2 + H2. The unit 409 receives an input of 70 kg/h CO and 45 kg/h H2O, and produces a hydrogen output 415 at 5 kg/h H2 and a CO2 output at 110 kg/h. The hydrogen flow 415 is added to the hydrogen flow 408, resulting in a hydrogen production 412 at a rate of 17,5 kg/h and a temperature of 40°C. The produced hydrogen 412 is supplied to a pressurization unit 413, resulting in a hydrogen flow 414 at a rate of 17,5 kg/h, a temperature of -30°C and a pressure of 800 bar.

The facility 117 produces a flow 410 of CO2, at atmospheric pressure, a temperature of 40°C and a rate of 110 kg/h. CO2 may be separated form other components in the output by means of a cryogenic process, thus requiring cold to obtain the very low temperatures. Such cryogenic process is e.g. commercially known under the name Cryocap. In the scheme of Fig. 4, a liquefaction unit 411 is used to produced liquefied CO2 at a temperature of -50°C, a pressure of 7 bar and a rate of 110 kg/h. It is also possible, however, that the cryogenic separation process already results in CO2 in liquid condition.

The hydrogen production facility 117 may be a centralized facility, wherein the pressurized hydrogen 414 is transported to an industrial user via a hydrogen grid. In another example, the facility 117 is a decentralized hydrogen production facility 117, for on-location production of hydrogen 414. In yet another example, the facility 117 is installed at a vehicle, e.g. a vessel, for onboard production of hydrogen 414, the produced hydrogen being used in a fuel cell for powering the vehicle.

Finally remark that instead of the abovementioned Autothermal Reforming (ATR) process in the reformer 405, also other types of processes are possible. For example, instead of ATR, another catalytic reforming process could be applied based on Steam Methane Reforming (SMR): CH4 + H2O → CO + 3 H2. In another example, instead of ATR, a Partial Oxidation is applied: CH4 + ½ O2 → CO + 2 H2. In both examples, a water-gas shift reaction can be applied afterwards to convert CO and H2O into CO2 and H2. The rest of the processes remain the same as explained with respect to the cycle applying ATR.

It is clear that Fig. 3 and Fig. 4 merely serve to illustrate the balance across a loop with one specific eNG conversion facility, per 1 MW input at the upstream location. In practice however, typically multiple downstream users will be present, and other energy input at the upstream location will apply.

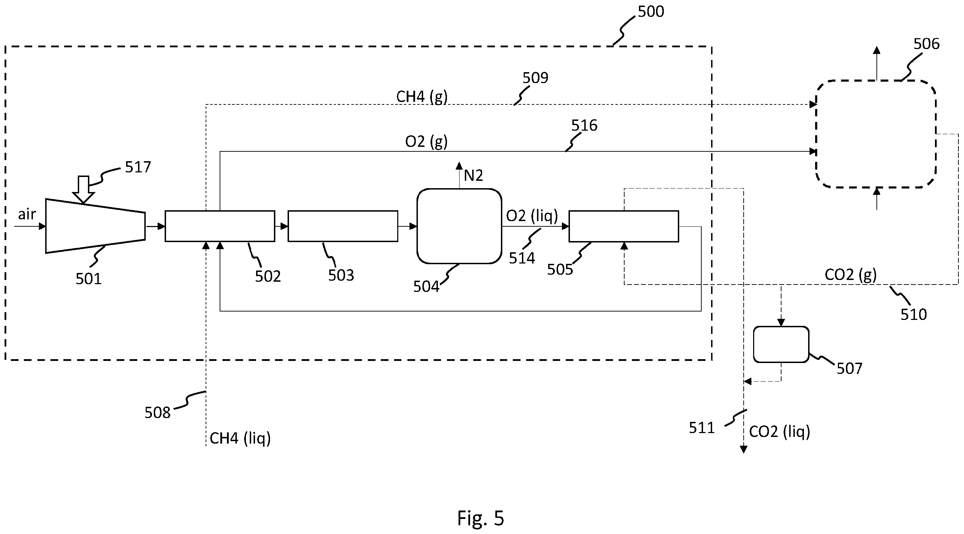

Fig. 5 illustrates an ASU 500, and how energy recuperation may apply with respect to the ASU processes. The ASU 500 comprises an air compressor 501, a unit for cryogenic distillation 504, and various heat exchanging units 502, 503, 505. The heat exchanging units 502, 503, 505 are to be considered as schematical representation of heat exchanging processes, and any of the units may in practice comprise multiple separate installations. The ASU delivers a flow 516 of gaseous oxygen at 40°C and 1 bar, to an eNG conversion facility 506, e.g. the hydrogen production facility 117 of Fig. 4, or the Allam-Fetvedt power plant 115 of Fig. 3. In Fig. 5, the oxygen flow 516 is at a rate of 20 kg/h, corresponding to the oxygen flow 404 of Fig. 4. Apart from the oxygen 404, the eNG conversion facility 506 receives a flow of gaseous synthetic methane, at a rate of 40 kg/h, a temperature of 40°C and a pressure of 1 bar.

The compressor receives air at a temperature of 8,3 °C, a pressure of 1 bar, and a mass flow rate of 100 kg/h. An electric motor 517 of 7,1 kW is used to drive the compressor 501. After being compressed in the compressor 501, thereby reaching a pressure of 10 bar and temperature of 27°C, the compressed air is cooled in the heat exchanging units 502, 503, before being supplied to the cryogenic distillation process 504. The cryogenic distillation 504 separates the air into nitrogen, at a rate of 80 kg/h, and oxygen, at a rate of 20 kg/h. The liquid oxygen 514 leaving the cryogenic distillation 504 is at a temperature of -153°C and a pressure of 10 bar. Afterwards, the liquid oxygen 514 is heated via the heat exchanging units 505 and 502, thereby resulting in the gaseous oxygen flow 515, at a rate of 20 kg/h, a temperature of 40°C and a pressure of 1 bar.

At the downstream location, liquified synthetic methane 508 is received from the upstream location, at a rate of 40 kg/h, pressure of 1 bar and temperature of - 164°C. The cold available from the liquified synthetic methane 508 may thus be used as a cold source in the downstream location. In particular, in heat exchanging unit 502, cold available from liquefied synthetic methane 508 contributes to cooling the air before being fed into the cryogenic distillation 504. Due to heating of the synthetic methane when passing through heat exchanging unit 502, the liquid synthetic methane 508 is vaporized, thereby resulting in the flow 509 of gaseous synthetic methane, at a rate of 40 kg/h, a pressure of 1 bar, and a temperature of 40°C.

Moreover, in heat exchanging unit 505, the cold available from the liquid oxygen 514 leaving the cryogenic distillation 504, is used for cooling CO2, while heating the oxygen. Gaseous CO2 510 leaves the eNG conversion facility at a rate of 110 kg/h, a pressure of 10 bar and a temperature of 40°C. Due to heat exchange in unit 505, the CO2 is liquified, resulting in liquid CO2 511 at a temperature of -50°C and a pressure of 7 bar, ready for transport towards the upstream location, at an average rate of 110 kg/h. Remark that unit 505 in fact acts as a liquefaction unit, wherein typically various compression and cooling steps are applied to arrive at the liquid CO2. It is also possible that a portion of the gaseous CO2 510 cannot be liquified via unit 505, but requires an additional liquefaction unit 507.

Fig. 5 illustrates one example of how cold available from liquefied synthetic methane can be recuperated in the downstream location. In a second example the cold from the liquid methane is used for cooling the turbine exhaust in the Allam-Fetvedt power plant 115 of Fig. 3. In a third example, the cold from the liquid methane is used for separating CO2 from other components in the output of the hydrogen production plant 117 of Fig. 4, wherein a cryogenic process is applied for such separation. In a fourth example, the evaporation unit 303 and the liquefaction unit 314 of Fig. 3, or the evaporation unit 400 and the liquefaction unit 411 of Fig. 4 are combined. In such a combined unit, cold available from liquid methane 322 may be used to liquify the gaseous CO2 410, 321, thereby at the same time vaporizing the liquid methane 322.

Apart from the cold recuperation, also measures to recuperate waste heat may be applied in the upstream processes. For example, waste heat generated in an oxy-combustion power plant 115 or in a hydrogen production facility 117 may be used to produce steam, for running a steam turbine. The steam turbine may contribute to cheap electricity production, and/or may generate electricity for power the ASU 304, 402.

At the upstream location 101, typically waste heat is available from heat released during the Sabatier process at the eNG production facility 110. The waste heat may be used to produce superheated steam, wherein the latter is fed to a steam turbine to produce electric power. Electric energy generated in this way may temporarily be stored in batteries. Alternatively, superheated steam is used for thermal power storage via molten salt battery technology. The stored electric energy may be used at a later time to power the electrolyser 113, 326, typically in periods of shortage in renewable energy 114. This enables a continuous operation of the Sabatier reactor 300.

In a second example, waste heat originating from the Sabatier process, may be used to produce superheated steam, which in turn may be used for the vaporizing liquid CO2 323. In a third example, the waste heat may be used for producing CO2 in a direct air capturing process, thereby providing the required additional CO2 122 for closing the loop 100.

Finally, at the upstream location 101, cold available from the liquified CO2 323 may be recuperated. For example, the evaporation unit 315 and the liquefaction unit 302 of Fig. 3 and Fig. 4, may be combined. In such a combined unit, cold available from liquid CO2 323 may be used to liquify the gaseous synthetic methane 317, thereby at the same time vaporizing the liquid CO2 323.

As is clear from Fig. 5, the cryogenic distillation 504 produces liquid oxygen 514, thereby allowing for an intermediate storage of liquid oxygen. Indeed, the ASU 500, 402, 304 may be used for producing liquid oxygen 514, when renewable electricity prices are low. The liquid oxygen 514 may be temporarily stored, and at a later stage - in periods where prices are high - be vaporized, for feeding a gaseous oxygen flow 325, 404 towards eNG conversion facilities 115, 117.

Furthermore, an optimisation between power and hydrogen production could be applied. Indeed, in a setup wherein both a power plant 115 and a hydrogen production facility 117 are available, an optimisation could be applied when selecting the way of converting eNG into useful energy, wherein electric power is produced when prices are high and vice versa.

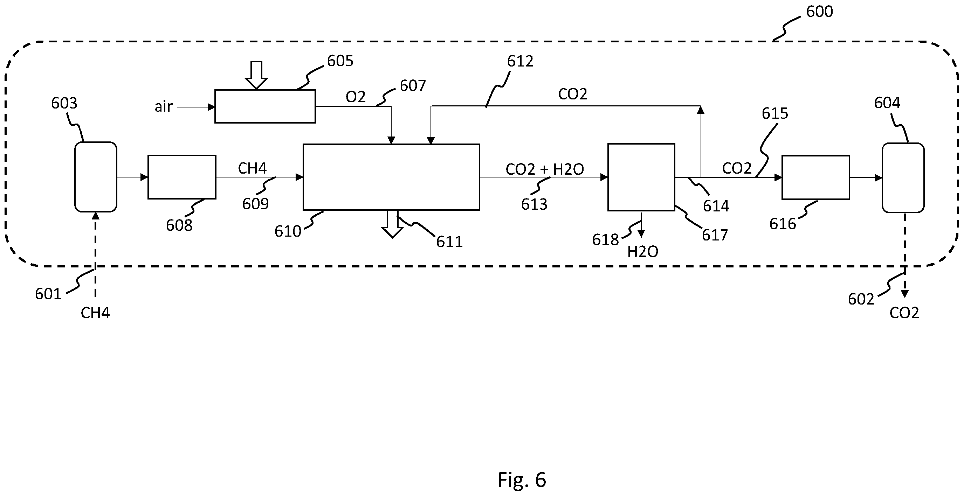

Fig. 6 schematically represents a vehicle 600 comprising an oxy-combustion engine 610. The vehicle 600 may serve as:
- eNG conversion facility 116 in the loop 100, namely a downstream facility 116 applying an oxy-combustion process; or
- transport vehicle in the loop 100, e.g. a vessel or train, doing the transport 103 of synthetic methane from the first 101 to the second geographical area 102, or the transport 104 of CO2 from the second 102 to the first geographical area 101; or
- a general vehicle of any type, operating independently from the loop 100.

Fig. 6 represents a vessel engine of 10 MW. Methane 601 is loaded to a CH4 storage tank 603 onboard the vehicle 600, where it is stored at a temperature of - 164°C and a pressure of 1 bar. The methane 601 may be synthetic methane 106 produced in the first geographical area, or may have another origin. Loading of CH4 to the tank may happen at dedicated spots, e.g. in a port. During operation, the liquid stored methane 603 is vaporized in an evaporation unit 608, after which a flow of gaseous methane 609, at a rate of 2050 kg/h is supplied to the oxy-combustion engine 610. The oxy-combustion engine is an internal combustion engine applying an oxy-combustion process: CH4 + 202 → CO2 + 2H2O. For this purpose, a flow of gaseous oxygen 607, at a rate of 8201 kg/h, is supplied to the engine 610. The gaseous oxygen 607 is produced by means of an onboard ASU 605, the latter supplied with ambient air at a rate of 35309 kg/h. Apart from the gaseous oxygen 607 and the gaseous methane 609, the oxy-combustion engine 610 also receives recirculated CO2, at a rate of 2500 kg/h.

The combustion engine 610 produces power 611 to propel the vehicle 600. The output 613 of the oxy-combustion process is a mixture comprising CO2 and water, at a rate of 8138 kg/h CO2 and 4613 kg/h H2O, and a temperature of 400°C and atmospheric pressure. The exhaust 613 is supplied to an exhaust processing unit 617, typically comprising a heat exchanger and separator. A water flow 618 is produced, at a rate of 4,6 m3/h. After separation, a portion of the exhaust CO2 614 is recirculated to the oxy-combustor 610. The remaining portion 615 of CO2, being a flow 615 of net produced CO2, at a rate of 5638 kg/h, is liquified in a liquefaction unit 616. The liquified CO2 is stored in a storage tank 604 onboard of the vehicle 600, at a temperature of -50°C and a pressure of 7 bar. At a dedicated location, e.g. in a port, CO2 602 may be unloaded from the vehicle 600. The unloaded CO2 may further be used in the loop 100, for synthetic methane production in the eNG production plant 110, or may serve any other purpose.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for operating a closed-loop carbon cycle (100), the method comprising:
- creating synthetic methane (106) from renewable energy (114) in a first geographical area (101), comprising:
∘ producing hydrogen (123) via electrolysis (113) of water, wherein electric power for said electrolysis (113) is mainly based on renewable energy from natural resources;
∘ feeding CO2 (109) and said produced hydrogen (123) into one or more Sabatier reactors (300) of an eNG production plant (110) located in said first geographical area (101), thereby producing synthetic methane (106) according to the Sabatier process,
- transporting said synthetic methane (106) created in said first geographical area (101) to a second geographical area (102), via shipping by vessel and/or via transmission pipeline and/or via train transport;
- generating and capturing CO2 while converting synthetic methane into usable energy (112) in said second geographical area (102), comprising:
∘ distributing synthetic methane (107) received from said first geographical area (101) to one or more eNG conversion facilities (111) located in said second geographical area (102);
∘ using said synthetic methane in said eNG conversion facilities (111), thereby producing an output comprising CO2 at the respective eNG conversion facilities;
∘ separating and capturing CO2 from said output at any of said eNG conversion facilities (111), resulting in captured CO2 (108);
wherein said one or more eNG conversion facilities (111) comprise:
- one or more power plants (115) or industrial plants (116) or vehicle propulsion systems (116) consuming oxygen and synthetic methane in an oxy-combustion, wherein CO2 is separated and captured from an output comprising CO2 and water;
and/or
- one or more hydrogen production facilities (117) consuming synthetic methane in a methane conversion process producing hydrogen, wherein CO2 is separated and captured from an output comprising CO2 and hydrogen;
and/or
- one or more industrial production plants (118) consuming synthetic methane in an industrial process, wherein CO2 is separated and captured from an output generated by said industrial process;
- transporting said captured CO2 (108) generated in said second geographical area (102) to said first geographical area (101), via shipping by vessel and/or via transmission pipeline and/or via train transport;
- establishing said closed-loop carbon cycle (100) by feeding said captured CO2 (109) received from said second geographical area (102) to said eNG production plant (110), and successively repeating said steps of
∘ creating synthetic methane (106) from renewable energy (114) in said first geographical area (101),
∘ transporting said synthetic methane (106) created in said first geographical area (101) to said second geographical area (102),
∘ generating and capturing CO2 while converting synthetic methane into usable energy (112) in said second geographical area (102),
∘ transporting captured CO2 (108) generated in said second geographical area (102) to said first geographical area (101), and
∘ feeding said captured CO2 (109) received from said second geographical area to said eNG production plant (110).

2. A method according to any of the preceding claims,
wherein said one or more eNG conversion facilities (111) comprise one or more industrial production plants (118) consuming synthetic methane in an industrial process, wherein CO2 is separated and captured from an output generated by said industrial process, and wherein at least 80% of the net produced CO2 in said output is separated and captured, preferably at least 85%, more preferably at least 90%, more preferably at least 95%, more preferably at least 97%.

3. A method according to any of the preceding claims,
wherein said one or more eNG conversion facilities (111) comprise one or more Allam-Fetvedt power plants (115), wherein CO2 resulting from an oxy-combustion of synthetic methane is used as a working fluid in a gas turbine (308) for producing electric power, according to the Allam-Fetvedt cycle or Allam cycle.

4. A method according to any of the preceding claims,
wherein said one or more eNG conversion facilities (111) comprise a vehicle propulsion system (116), said vehicle propulsion system (116) comprising an oxy-combustion engine (610) installed on a vehicle (600), and wherein:
- synthetic methane received from said first geographical location (101) is supplied to a storage tank (603) onboard of said vehicle (600), and
- at said vehicle (600):
∘ oxygen is produced by means of an Air Separation Unit (605) onboard of said vehicle (600), or is stored in a tank onboard of said vehicle;
∘ said oxygen is used, together with synthetic methane from said storage tank (603), in said oxy-combustion engine (610), said oxy-combustion engine (610) used for propelling said vehicle (600);
∘ CO2 produced by said engine (610) is captured, and said captured CO2 (615) is stored in a second storage tank (604) onboard of said vehicle (600).

5. A method according to any of the preceding claims,
wherein said one or more eNG conversion facilities (111) comprise one or more hydrogen production facilities (117) for converting synthetic methane into hydrogen, said conversion comprising:
- feeding gaseous synthetic methane (401) to a methane converter (405);
- in said methane converter (405), applying a conversion process producing syngas comprising hydrogen (408) and CO (406), said conversion process being based on Autothermal Reforming or Steam Methane Reforming or Partial Oxidation;
- applying a water-CO shift reaction (409) to convert CO and steam into hydrogen (415) and CO2 (410), resulting in said output comprising CO2 and hydrogen;
- separating CO2 (410) from other gas components in said output, resulting in gaseous or liquid captured CO2 (323).

6. A method according to any of the preceding claims,
wherein said one or more eNG conversion facilities (111) comprise a hydrogen production facility (212) at a decentralised location, and wherein:
- said transport (103) of synthetic methane via shipping or transmission pipeline or train transport is followed by a further distribution transport to said decentralised location;
- said synthetic methane received at said decentralised location after said distribution transport is supplied to said decentralised hydrogen production facility (212), thereby producing hydrogen for on-location use,
said decentralised hydrogen production facility (212) being a hydrogen refuelling station.

7. A method according to any of the preceding claims,
wherein said one or more eNG conversion facilities (111) comprise a hydrogen production facility (117) installed on a vehicle, for example a vessel, and wherein:
- synthetic methane received from said first geographical location (101) is supplied to a storage tank on board of said vehicle, and
- at said vehicle:
∘ oxygen is produced by means of an Air Separation Unit (402) onboard of said vehicle, or is stored in a tank onboard of said vehicle;
∘ said oxygen is used, together with synthetic methane from said storage tank, in said hydrogen production facility (117), thereby on-board producing hydrogen for use in a fuel cell, said fuel cell used for propelling said vehicle;
∘ CO2 produced during on-board production of hydrogen is captured, and said captured CO2 (410) is stored in a second storage tank onboard of said vehicle.

8. A method according to any of the preceding claims,
wherein said synthetic methane (106) created in said first geographical area (101) is transported to said second geographical area (102) via shipping by vessel, wherein the vessel for synthetic methane transport is driven by an engine, and CO2 produced by said engine during said transport is captured and stored onboard of said vessel,
and said CO2 (108) generated and captured in said second geographical area (102) is transported to said first geographical area (101) via shipping by vessel, wherein the vessel for CO2 transport is driven by an engine, and CO2 produced by said engine during said transport is captured and stored onboard of said vessel,
thereby obtaining a zero-emission transport between the first (101) and second geographical area (102) and between the second (102) and first geographical area (101).

9. A method according to claim 8,
wherein said engine (610) of the vessel for synthetic methane transport and/or of the vessel for CO2 transport, consumes synthetic methane (603) stored onboard of said vessel, said synthetic methane being created from renewable energy in said first geographical area (101).

10. A method according to claim 8 or 9,
wherein CO2 (604) captured and stored onboard of the vessel for synthetic methane transport and/or of the vessel for CO2 transport, is used in said first geographical area (101) for producing synthetic methane (106) in said eNG production plant (110).

11. A method according to claim 8 to 10,
wherein said engine (610) of the vessel for synthetic methane transport and/or of the vessel for CO2 transport, is an internal combustion engine using oxy-combustion.

12. A method according to any of the preceding claims,
wherein at least during selected time periods of operating said closed-loop cycle, additional CO2 (122) is fed to said eNG production plant (110), in addition to said CO2 (109) received from said second geographical area (102), for producing synthetic methane (106), said additional CO2 (122) being produced via a Direct Air Capturing process, abbreviated DAC,
and wherein at least part of the heat required in said DAC process results from waste heat available in said eNG production plant (110), said waste heat originating from heat released during said Sabatier process.

13. A method according to any of the preceding claims,
wherein the net quantity of produced CO2 corresponds to the total CO2 production by all of said eNG conversion facilities (111) deducted with the CO2 amount recirculated within specific eNG conversion facilities,
and wherein at least 90% of said net quantity of produced CO2 is reused in said eNG production plant (110) for synthetic methane production, preferably at least 95%, more preferably at least 97%.

14. A method according to any of the preceding claims,
wherein said synthetic methane (317) produced at said eNG production plant (110) is liquified before transport to said second geographical area (102),
and wherein in said second geographical area (102), cold available from said liquified synthetic methane (322) is used:
- for liquifying captured CO2 (321) before transport to said first geographical area (101), thereby vaporizing liquified synthetic methane (322) before feeding into one of said eNG conversion facilities; or
- for cooling air in an Air Separation Unit (500), thereby vaporizing liquified synthetic methane (508) before feeding into one of said eNG conversion facilities (506); or
- in a cryogenic process for separating CO2 from other components, said cryogenic process being applied in one of said eNG conversion facilities (117) being a hydrogen production facility; or
- as a cooling source in an Allam-Fetvedt cycle, said cycle being applied in one of said eNG conversion facilities (115) being an Allam-Fetvedt power plant, or as a cooling source in a power production via an organic rankine cycle.

15. A method according to any of the preceding claims,
wherein said CO2 captured (321) from said eNG conversion facilities is liquified before transport to said first geographical area (101),
and wherein in said first geographical area (101), cold available from said liquified CO2 (323) is used
- for liquifying synthetic methane (317) before transport to said second geographical area (102), thereby vaporizing liquified CO2 (323) before feeding into said eNG production plant (110); or
- as a cooling source in said electrolysis (326) or said eNG production plant (110).

16. A method according to any of the preceding claims,
wherein at said eNG production plant (110), waste heat originating from heat released during said Sabatier process, is used to produce superheated steam, said superheated steam being used afterwards for electric power generation by means of a steam turbine,
and wherein generated electric energy is temporarily stored by means of battery technology, or said superheated steam is used for thermal power storage via molten salt battery technology,
and wherein in periods of shortage in renewable energy from natural resources, said stored electric energy is used for producing hydrogen by electrolysis, said produced hydrogen being fed to said one or more Sabatier reactors (300), thereby allowing to continuously operate said Sabatier reactors (300).

17. A method according to any of the preceding claims,
wherein, during selected periods, liquid oxygen (514) is produced by means of one or more Air Separation Units (500) in said second geographical area (102), based on a cryogenic distillation of ambient air, said produced liquid oxygen (514) being temporarily stored,
and wherein during other periods, said stored liquid oxygen (514) is vaporized and supplied to one or more of said eNG conversion facilities (506), for conversion of synthetic methane.
